(19) Europäisches Patentamt
European Patent Office
Office européen des brevets

(11) **EP 3 069 427 B1**

(12) **EUROPÄISCHE PATENTSCHRIFT**

(45) Veröffentlichungstag und Bekanntmachung des Hinweises auf die Patenterteilung:
**27.06.2018 Patentblatt 2018/26**

(21) Anmeldenummer: **14796479.5**

(22) Anmeldetag: **07.11.2014**

(51) Int Cl.:
**H02H 7/06** *(2006.01)* **H02H 7/125** *(2006.01)*
**B60L 11/02** *(2006.01)* **H02M 1/32** *(2007.01)*

(86) Internationale Anmeldenummer:
**PCT/EP2014/074027**

(87) Internationale Veröffentlichungsnummer:
**WO 2015/071186 (21.05.2015 Gazette 2015/20)**

(54) **ÜBERSPANNUNGSSCHUTZ FÜR KRAFTFAHRZEUGBORDNETZ BEI LASTABWURF**

OVERVOLTAGE PROTECTION FOR A MOTOR-VEHICLE ELECTRICAL SYSTEM IN THE EVENT OF LOAD SHEDDING

PROTECTION CONTRE LES SURTENSIONS POUR UN RÉSEAU DE BORD D'UN VÉHICULE AUTOMOBILE LORS D'UN DÉLESTAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2013 DE 102013223316**

(43) Veröffentlichungstag der Anmeldung:
**21.09.2016 Patentblatt 2016/38**

(73) Patentinhaber: **SEG Automotive Germany GmbH**
**70499 Stuttgart (DE)**

(72) Erfinder:
• **OTTE, Christopher**
**72762 Reutlingen (DE)**
• **MEHRINGER, Paul**
**70569 Stuttgart (DE)**
• **FEILER, Wolfgang**
**72770 Reutlingen (DE)**

(74) Vertreter: **Steinbauer, Florian et al**
**Dehns Germany**
**Theresienstraße 6-8**
**80333 München (DE)**

(56) Entgegenhaltungen:
**EP-A2- 1 198 048      WO-A1-2009/093101**
**DE-A1- 19 835 316     FR-A1- 2 975 241**

**Beschreibung**

Die vorliegende Erfindung betrifft ein Kraftfahrzeugbordnetz, ein Verfahren und Mittel zur Implementierung des Verfahrens gemäß den Oberbegriffen der unabhängigen Patentansprüche.

Stand der Technik

Zur Speisung von Gleichstromsystemen aus Drehstromsystemen, beispielsweise von Kraftfahrzeugbordnetzen durch Drehstromgeneratoren, können Gleichrichter unterschiedlicher Bauart eingesetzt werden. In Kraftfahrzeugbordnetzen werden in Entsprechung zu den üblicherweise verbauten drei-, vier- oder fünfphasigen Drehstromgeneratoren üblicherweise Brückengleichrichter in sechs-, acht- oder zehnpulsiger Ausführung verwendet. Die Erfindung eignet sich jedoch auch für Brückengleichrichter für andere Phasenzahlen.

Ist nachfolgend vereinfacht von einem Generator die Rede, kann es sich hierbei auch um eine generatorisch und motorisch betreibbare elektrische Maschine handeln, beispielsweise einen sogenannten Startergenerator.

Ein kritischer Betriebsfall bei Brückengleichrichtern ist der sogenannte Lastabwurf (engl. Load Dump). Dieser tritt auf, wenn sich bei hoch erregtem Generator und einem entsprechend hohen abgegebenen Strom die Last am Generator bzw. dem damit verbundenen Brückengleichrichter (z.B. durch Abschalten von Verbrauchern) schlagartig verringert. Aufgrund der weiterhin durch den Generator gelieferten Energie treten hierbei für ca. 300 bis 500 ms hohe Spannungen auf. Falls diese nicht oder nicht vollständig durch kapazitiv wirkende Elemente im Gleichspannungsnetz (z.B. die Kraftfahrzeugbatterie) oder im Gleichrichter abgefangen werden können, kann es zu Überspannungsschäden bei Komponenten im Kraftfahrzeugbordnetz kommen.

In herkömmlichen (passiven) Brückengleichrichtern erfolgt ein gewisser Schutz durch den Gleichrichter selbst, nämlich mittels der dort klassischerweise verbauten Gleichrichter-Zenerdioden, in denen die Überspannung geklammert und die überschüssige Energie in Wärme umgesetzt werden kann.

Wie beispielsweise in der DE 10 2009 046 955 A1 erläutert, ist jedoch in Kraftfahrzeugen der Einsatz von aktiven bzw. gesteuerten Brückengleichrichtern wünschenswert. Dies ist unter anderem deshalb der Fall, weil aktive Brückengleichrichter im Gegensatz zu passiven bzw. ungesteuerten Brückengleichrichtern geringere Verlustleistungen im Normalbetrieb aufweisen. Derzeit erhältliche ansteuerbare bzw. aktive Schaltelemente für solche aktiven Brückengleichrichter, beispielsweise MOSFET, besitzen jedoch keine integrierte Klammerfunktion mit einer ausreichenden Robustheit wie herkömmliche Gleichrichter-Zenerdioden und können daher die Überspannung nicht abfangen. Daher sind in aktiven Brückengleichrichtern zusätzliche Schutzstrategien erforderlich.

Bei einem Lastabwurf können beispielsweise die Generatorphasen kurzgeschlossen werden, indem einige oder alle Schaltelemente des oberen oder unteren Gleichrichterzweigs eines entsprechenden Gleichrichters kurzzeitig leitend geschaltet werden, wie beispielsweise auch in der DE 198 35 316 A1 offenbart und in der DE 10 2009 046 955 A1 diskutiert. Dies erfolgt insbesondere auf Grundlage einer Auswertung der an den Gleichspannungsanschlüssen des aktiven Brückengleichrichters anliegenden Ausgangsspannung. Überschreitet diese einen vorgegebenen oberen Schwellwert, wird ein entsprechender Kurzschluss eingeleitet und die Ausgangsspannung sinkt. Unterschreitet die Ausgangsspannung danach einen vorgegebenen unteren Schwellwert, wird der Kurzschluss aufgehoben und die Ausgangsspannung steigt erneut an. Es handelt sich somit um ein typisches Hystereseverhalten. Die Ausgangsspannung pendelt daher bei einem Lastabwurf zwischen dem oberen und dem unteren Schwellwert.

FR 297 241 A1 offenbart ein Verfahren zum Steuern einer mehrphasigen rotierenden elektrischen Maschine, wobei die elektrische Maschine als Generator arbeitet und an ein elektrisches Bordnetz angeschlossen ist, wobei bei einem Lastabfall zumindest eine Wicklung mittels einer Wicklngskurzschlusssteuerung derart kurzgeschlossen wird, dass wenn eine erste Messung einer Spannung B+ einen ersten vorbestimmten Schwellwert und einen ersten Strom der Phase übersteigt, ein entsprechender Kurzschluss vorgenommen wird. Der Schwellwert der Spannung kann beispielsweise durch Filtern der Netzspannung mit einer vorgegebenen konstanten Zeit erhalten werden.

EP 11 98 048 A2 offenbart einen Spannungsregler zur Regelung einer Ausgangsspannung eines Generators, welcher eine Ankerwicklung und eine Feldwicklung aufweist, wobei der Generator mit einer Leistungszuführungsleitung verbunden ist und der Spannungsregler folgendes enthält: Schaltmittel welche in Serie mit der Feldwicklung geschaltet sind, um eine Ein-/Ausreglunng eines Feldstroms zu bewirken welcher der Feldwicklung zugeführt wird, eine Freilaufschaltung, welche parallel zu der Feldwicklung geschaltet ist, um den Feldwicklungsstrom zur Feldwicklung durchzulassen, wenn die Schaltmittel abgeschaltet sind, Felderfassungsmittel zur Detektierung eines Fehlers in der Leistungszuführungsleitung, welche mit einem Ausgangsanschluss des Generators verbunden sind, und Leistungserzeugungssteuermittel zur Steuerung der Leistungserzeugung des Generators zur Unterdrückung der Leistungserzeugung bei Feststellung des Fehlers in der Leistungszuführungsleitung, wobei die Leistungserzeugungssteuerungsmittel die Leistungserzeugung für eine vorbestimmte Zeit unterdrücken, welche länger ist al seine Zeitkonstante der Feldwicklung.

WO 2009/093101 A1 offenbart ein Regelsystem zur Regelung eines Feldstrom eines Wechselstromgenerators, der eine Logik, die zum Empfangen und Verarbeiten eines Referenzsignals eingerichtet ist, aufweist, und ferner eine Vergleichslogik aufweist, die zum Vergleich eines Ausgangssignals des Wechselstromgenerators mit einem Referenzsignal eingerichtet ist. Bei der Festlegung des Referenzsignals wird zudem ein Temperatursignal bestimmt, wobei beim Überschreiten des Temperatursignals über einen ersten Schwellwert eine entsprechende Kompensation beim Referenzsignal berücksichtigt wird.

Probleme können sich hier deshalb ergeben, weil es aufgrund der genannten Schaltvorgänge, also repetierenden Phasenkurzschlüssen, zu einer starken Belastung der beteiligten Schaltelemente kommt. Diese kann die Schaltelemente beschädigen, wenn sie nicht entsprechend dimensioniert sind.

Es besteht daher der Bedarf nach verbesserten Schutzstrategien für aktive Brückengleichrichter bei Lastabwurf.

Offenbarung der Erfindung

Vor diesem Hintergrund schlägt die Erfindung ein Kraftfahrzeugbordnetz, ein Verfahren und Mittel zur Implementierung des Verfahrens mit den Merkmalen der unabhängigen Patentansprüche vor. Vorteilhafte Ausgestaltungen sind Gegenstand der Unteransprüche sowie der nachfolgenden Beschreibung.

Vorteile der Erfindung

Die Erfindung geht von einem an sich bekannten Kraftfahrzeugbordnetz mit einer elektrischen Maschine, einem aktiven Brückengleichrichter und zumindest einer Steuereinrichtung aus. Wie insoweit üblich, ist die zumindest eine Steuereinrichtung dafür eingerichtet, eine von der elektrischen Maschine an einer Anzahl von Phasenanschlüssen ausgegebene Wechselspannung durch Ansteuern von aktiven Schaltelementen des Brückengleichrichters in eine Gleichspannung zu wandeln. Ferner sind Mittel vorgesehen, die dafür eingerichtet sind, einen Kurzschluss zumindest zweier der Phasenanschlüsse einzuleiten, sobald ein die Gleichspannung kennzeichnendes Signal einen oberen Schwellwert überschreitet und den Kurzschluss aufzuheben, sobald das die Gleichspannung kennzeichnende Signal danach einen unteren Schwellwert unterschreitet.

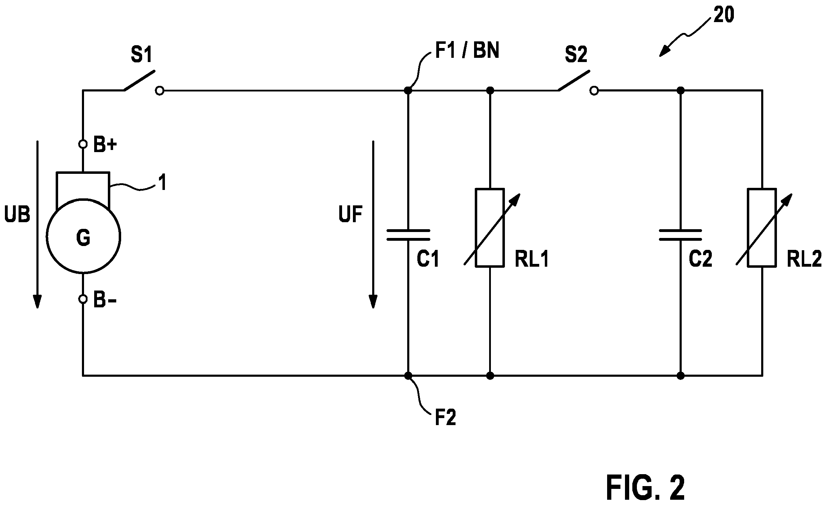

Ein derartiges Kraftfahrzeugbordnetz bzw. eine elektrische Maschine mit einem Brückengleichrichter und einer Steuereinrichtung eines solchen Kraftfahrzeugbordnetzes wird unter Bezugnahme auf die Figur 2 unten näher erläutert.

Erfindungsgemäß ist vorgesehen, ein entsprechendes Kraftfahrzeugbordnetz bzw. dessen Steuereinrichtung mit Auswertemitteln auszustatten, die dafür eingerichtet sind, einen Wert der Gleichspannung, die durch den aktiven Brückengleichrichter ausgegeben wird, zu erfassen. Wie bereits erläutert, wird auch in herkömmlichen Kraftfahrzeugbordnetzen ein solcher Wert erfasst und auf dieser Grundlage festgestellt, ob ein Lastabwurf vorliegt.

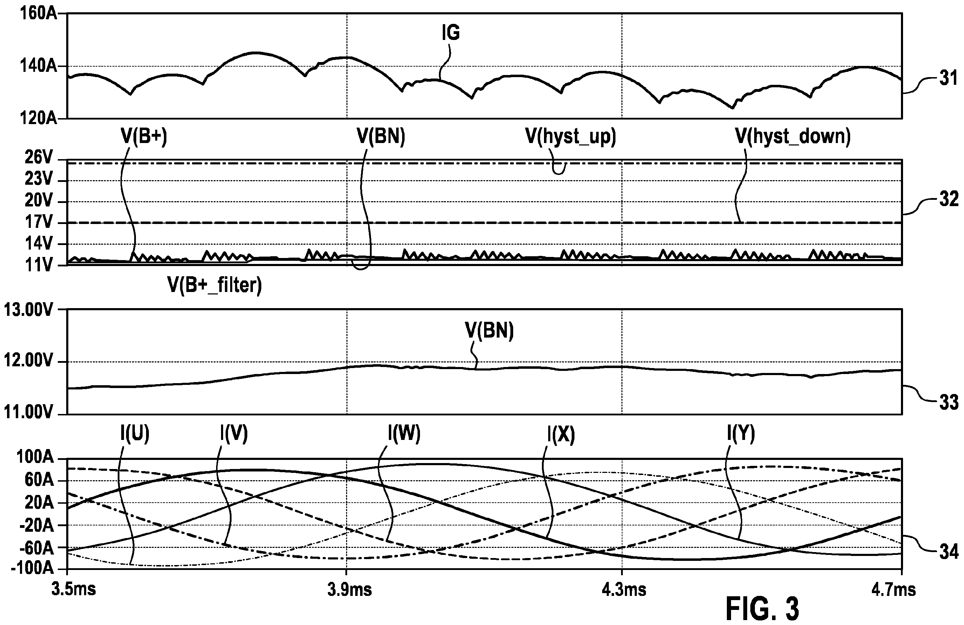

Erfindungsgemäß ist jedoch ferner vorgesehen, den erfassten Wert zu filtern und den gefilterten Wert als das die Gleichspannung kennzeichnende Signal bereitzustellen. Wie nachfolgend erläutert und insbesondere unter Bezugnahme auf die Figuren 3 bis 5 gezeigt, ermöglichen es die erfindungsgemäßen Maßnahmen, hochfrequente repetitive Umschaltvorgänge zwischen Kurzschluss und aufgehobenem Kurzschluss zu vermeiden. Die aktiven Schaltelemente eines entsprechenden Brückengleichrichters werden durch die Verwendung der erfindungsgemäßen Maßnahmen geringer belastet.

Mit anderen Worten wird das herkömmlicherweise in schneller Folge stattfindende, unerwünschte Aktivieren und Deaktivieren des Phasenkurzschlusses durch die jeweils die verwendeten Auslöseschwellen über- und unterschreitenden Spannungsspitzen des von dem aktiven Brückengleichrichter ausgegebenen Spannungssignals verhindert, indem ein Spannungssignal mit einem entsprechend angepassten Filter gefiltert wird und/oder eine adaptive Steuerung von Auslöseschwellen eines entsprechenden Komparators erfolgt, der Teil der erläuterten Auswertemittel ist. Ein wesentlicher Vorteil der erfindungsgemäß vorgeschlagenen Maßnahmen ist die Vermeidung häufiger Schaltvorgänge in den verwendeten aktiven Schaltelementen, beispielsweise der in einem aktiven Brückengleichrichter verbauten MOSFET, die zu einer starken, gegebenenfalls schädigenden Beanspruchung führen könnten. Die verbauten Schaltelemente können daher kleiner und kostengünstiger ausgebildet werden.

Die Erfindung kann sämtliche geeigneten Filtermittel umfassen. Nachfolgend wird überwiegend auf herkömmliche RC-Filter, Glitchfilter und/oder SC-Filter (Switched Capacitor) Bezug genommen, welche sich im Kontext der vorliegenden Anmeldung als besonders günstig erweisen.

Insbesondere wird in diesem Zusammenhang wenigstens eine Resonanzfrequenz des Bordnetzes berücksichtigt und eine Filterung des genannten Signals auf dieser Grundlage vorgenommen. Ein wesentlicher Aspekt ist in diesem Zusammenhang die Emulation des Verlaufs der Bordnetzspannung durch den Einsatz eines Filters definierter Grenzfrequenz zwischen der durch den aktiven Brückengleichrichter ausgegebenen Gleichspannung und einem Komparatorblock, der über geeignete Auslöseschwellen über die Deaktivierung und Aktivierung des Phasenkurzschlusses entscheidet.

Mit besonderem Vorteil kann im Rahmen der vorliegenden Erfindung auch ein Komparator eingesetzt werden, der eine einstellbare Komparatorschwelle aufweist. Ist die Komparatorschwelle auf einen oberen Wert eingestellt, kann dieser dem oberen Schwellwert entsprechen. In gleicher Weise kann, wenn die Komparatorschwelle auf einen niedrigeren Wert eingestellt ist, diese dem unteren Schwellwert entsprechen. Um unerwünscht häufige Schaltvorgänge zu verhindern, kann insbesondere auch vorgesehen sein, den unteren Schwellwert für eine vorbestimmte Zeit abzusenken, sobald das die Gleichspannung kennzeichnende Signal den oberen Schwellwert überschreitet bzw. den oberen Schwellwert für eine vorbestimmte Zeit anzuheben, sobald das die Gleichspannung kennzeichnende Signal danach den unteren Schwellwert überschreitet. Auf diese Weise wird vermieden, dass das genannte Signal mehrfach innerhalb der angegebenen Zeit einen entsprechenden Schwellwert kreuzt und hierdurch zu einem Schalten der beteiligten aktiven Schaltelemente führt. Anstelle einer Absenkung bzw. Anhebung eines entsprechenden Wertes der Komparatorschwelle kann auch vorgesehen sein, die entsprechenden Schwellwerte faktisch auf andere Weise zu deaktivieren, falls ein entsprechender Komparator für einen solchen Betrieb ausgebildet ist. Ziel ist es jeweils, in einem vorbestimmten Zeitraum, der auf Grundlage von Bordnetzcharakteristika des jeweiligen Bordnetzes ausgewählt wird, beispielsweise aufgrund von Widerstands-, Induktivitäts- und Kapazitätswerten, eine entsprechende Schwellwertkreuzung zu vermeiden.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form von Software ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Kurze Beschreibung der Zeichnungen

Figur 1    zeigt ein Bordnetz mit einem Brückengleichrichter, einem Generator und einer Steuereinrichtung in schematischer Teildarstellung.

Figur 2    zeigt eine Anordnung zur Simulation von Lastabwürfen in einem Bordnetz in schematischer Darstellung.

Figur 3    zeigt Strom- und Spannungsverläufe bei aktiver Gleichrichtung in einem Bordnetz gemäß dem Stand der Technik in Form von Diagrammen.

Figur 4    zeigt Strom- und Spannungsverläufe in einem Bordnetz im Fall eines Lastabwurfs gemäß dem Stand der Technik in Form von Diagrammen.

Figur 5    zeigt Strom- und Spannungsverläufe in einem Bordnetz im Fall eines Lastabwurfs gemäß einer Ausführungsform der vorliegenden Erfindung in Form von Diagrammen.

Figur 6    zeigt Kapazitäten und Induktivitäten in einem Bordnetz in Form eines schematischen Ersatzschaltbilds mit beispielhaften Werten.

Figur 7    zeigt Maßnahmen zum Filtern eines Spannungssignals gemäß einer Ausführungsform der Erfindung in schematischer Darstellung.

Figur 8    zeigt in den Teilfiguren 8 A und 8B Maßnahmen zum Filtern eines Spannungssignals gemäß einer Ausführungsform der Erfindung in schematischer Darstellung.

Figur 9    zeigt Maßnahmen zum Betreiben eines Komparators gemäß einer Ausführungsform der Erfindung in schematischer Darstellung.

Ausführungsform(en) der Erfindung

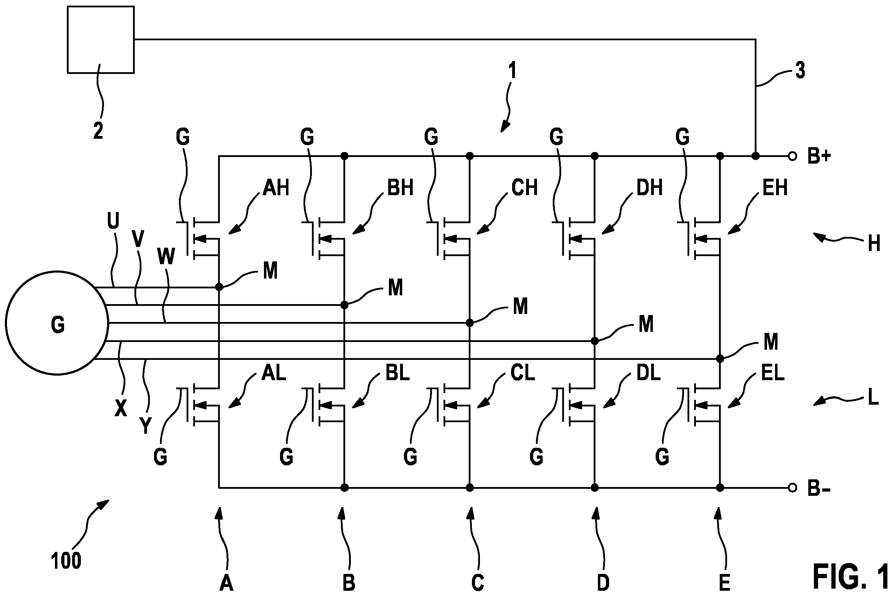

In Figur 1 ist eine herkömmliche Anordnung mit einem Brückengleichrichter 1 und einem Generator G am Beispiel eines fünfphasigen Systems schematisch dargestellt. Der Brückengleichrichter 1 ist in Figur 1 als zehnpulsiger Brückengleichrichter dargestellt, der zur Gleichrichtung eines Drehstroms eines fünfphasigen Generators G eingerichtet ist. In gleicher Weise kann jedoch beispielsweise auch ein drei-, vier-, sechs- oder siebenphasiger Generator G und ein entsprechend hieran angepasster sechs-, acht- zwölf- oder vierzehnpulsiger Brückengleichrichter 1 eingesetzt werden. Der Brückengleichrichter 1 ist Teil eines hier nur teilweise dargestellten Bordnetzes 100.

Der Brückengleichrichter 1 weist fünf Halbbrücken A bis E auf, die jeweils über ihren Mittelabgriff M mit den fünf Generatorphasen bzw. entsprechenden Phasenanschlüssen U bis Y verbunden sind.

Die Halbbrücken A bis E sind mit ihren Enden jeweils mit den Gleichspannungsanschlüssen B+ und B-, beispielsweise Batteriepolen und/oder entsprechenden Versorgungsleitungen eines Bordnetzes 100, verbunden. Der Anschluss B- kann dabei mit Masse verbunden sein.

Die Halbbrücken A bis E weisen jeweils aktive Schaltelemente AH bis EH und AL bis EL auf, die hier als MOSFET veranschaulicht sind. Diese sind jeweils in einen oberen Zweig H (Highside) und einen unteren Zweig L (Lowside) der einzelnen Halbbrücken A bis E eingebunden.

Die Phasenanschlüsse U bis Y können nach Maßgabe einer entsprechenden Beschaltung der aktiven Schaltelemente AH bis EH und AL bis EL jeweils mit einem der beiden Gleichspannungsanschlüsse B+ oder B- verbunden werden. Werden zwei oder mehr Phasenanschlüsse U bis Y jeweils mit demselben Gleichspannungsanschluss B+ bzw. B- verbunden, kommt dies einem Kurzschließen dieser Phasenanschlüsse U bis Y über den jeweiligen Gleichspannungsanschluss B+ bzw. B- gleich.

Die Beschaltung der aktiven Schaltelemente AH bis EH und AL bis EL erfolgt über ihre jeweiligen Gate-Anschlüsse G durch eine Steuereinrichtung 2 über nicht dargestellte Ansteuerleitungen. Dabei kann eine Steuereinrichtung 2 für alle Halbbrücken A bis E gemeinsam vorgesehen sein. Alternativ dazu kann auch jede der Halbbrücken A bis E eine individuelle Steuereinrichtung aufweisen. Ist letzteres der Fall, können Funktionen beliebig zwischen individuellen Steuereinrichtungen und einer gemeinsamen Steuereinrichtung 2 verteilt sein.

Der Normalbetrieb des Generators umfasst, die aktiven Schaltelemente AH bis EH und AL bis EL derart anzusteuern, dass an den Phasenanschlüssen U bis Y anliegende Stromsignale, abhängig von der Stromrichtung, abwechselnd nach B+ und B- durchgesteuert werden, wie grundsätzlich bekannt.

Ein Lastabwurf kann in einer in Figur 1 dargestellten Anordnung beispielsweise auf Grundlage einer an dem Gleichspannungsanschluss B+ anliegenden Spannung detektiert werden. Hierzu ist die Steuereinrichtung 2 über eine Leitung 3 mit dem Gleichspannungsanschluss B+ verbunden. Wird ein definierter Spannungsschwellwert überschritten, liegt ein Lastabwurf vor.

Die Ansteuerung des Gleichrichters 1 bei einem erkannten Lastabwurf kann umfassen, die Phasenanschlüsse U bis Y zeitlich definiert kurzzuschließen. In der Folge fällt der in das Bordnetz eingespeiste Strom auf Null ab, die über die Leitung 3 erfasste Spannung sinkt. Ein entsprechender Kurzschluss kann durch ein gleichzeitiges Ansteuern und damit Leitendschalten einiger oder aller Schaltelemente AH bis EH einerseits oder AL bis EL andererseits, also einiger oder aller Schaltelemente eines Gleichrichterzweigs H oder L hergestellt werden. Wird ein solcher Kurzschluss gelöst, steigen der in das Bordnetz eingespeiste Strom und die über die Leitung 3 erfasste Spannung wieder an.

In Figur 2 ist eine Schaltung zum Simulieren von Lastabwürfen in einem Bordnetz eines Kraftfahrzeugs dargestellt und insgesamt mit 20 bezeichnet. Die Schaltung 20 stellt gleichzeitig ein Ersatzschaltbild eines Bordnetzes dar, in das ein Generator G und ein Gleichrichter 1, beispielsweise wie in der zuvor erläuterten Figur 1 dargestellt, eingebunden sind. Wie erläutert, kann ein entsprechendes Bordnetz auch Generatoren G und/oder Gleichrichter 1 mit anderer Phasen- bzw. Pulszahl aufweisen.

An dem Generator G mit dem Gleichrichter 1 liegt hierbei eine Spannung UB an, wie durch einen entsprechend beschrifteten Pfeil veranschaulicht. Die Kondensatoren C1 und C2 sowie die Lastwiderstände RL1 und RL2 repräsentieren Kapazitäten bzw. Widerstände eines realen Bordnetzes. Der Kondensator C1 entspricht dabei einem Kondensator an einem Fremdstartstützpunkt, der zum Fremdstarten des entsprechenden Kraftfahrzeugs vorgesehen ist. Die Anschlüsse F1 und F2 sind dabei zur Starthilfe vorgesehen. An einem Punkt BN, der dem Anschluss F1 entsprechen kann, kann eine Bordnetzspannung, beispielsweise gegen Masse oder den Anschluss F2, gemessen werden. Der Kondensator C1 ist unter anderem dazu vorgesehen, Spannungsschwankungen im Bordnetz abzupuffern. Die über den Kondensator C1 abfallende Spannung ist ebenfalls mit einem Pfeil veranschaulicht und mit UF bezeichnet.

Es ist zu beachten, dass in üblichen Kraftfahrzeugen der Generator B mit dem Gleichrichter 1 einerseits und der Kondensator C1 andererseits bzw. auch schon der Punkt BN bzw. die Anschlüsse F1 und F2 durch Leitungen mit einer Länge von typischerweise 1,5 bis 2 Metern und einem Querschnitt von beispielsweise 25 Quadratmillimetern voneinander getrennt sind. Nachfolgend werden die Gleichspannungsanschlüsse des Gleichrichters, B+ und B- demgegenüber als Anschlüsse betrachtet, die direkt am Gleichrichter vorgesehen sind. Beispielsweise die Anschlüsse F1 und F2 und der Punkt BN sind hiervon, wie erläutert, durch entsprechende Leitungslängen getrennt.

Die erläuterten Leitungen mit den genannten Eigenschaften entsprechen im elektrischen Ersatzschaltbild im Wesentlichen Induktivitäten. Diese Induktivitäten sind dafür verantwortlich, dass es bei schnellen Stromänderungen an den Gleichspannungsanschlüssen B+ und B- des Gleichrichters 1 zu induzierten Spannungsspitzen kommt. Die Spannungen am Fremdstartstützpunkt, d.h. die Spannung UF, die zwischen den Anschlüssen F1 und F2 bzw. dem Punkt BN gegen Masse abfällt, kann daher nicht direkt von einer am Generator G bzw. dem Gleichrichter 1 angebrachten Elektronik erfasst werden. Die vorliegende Erfindung berücksichtigt auch dies.

Ist im Folgenden von "Spannungen am Gleichrichter" die Rede, handelt es sich hierbei um Spannungen, die direkt am Gleichrichter 1, also beispielsweise am Anschluss B+ gemessen werden können. Diese werden auch mit V(B+) bezeichnet. Aufgrund der erläuterten Induktivitäten der Leitungen unterscheiden sich die zeitlichen Verläufe dieser Spannungen ggf. von den zeitlichen Verläufen von "Spannungen am Bordnetz", die beispielsweise am Anschluss F1 bzw. dem Punkt BN gemessen werden können und mit V(BN) bezeichnet werden.

Zur Simulation von Lastabwürfen sind Schalter S1 und S2 vorgesehen. Zu Beginn eines Lastabwurftests bzw. einer entsprechenden Simulation sind beide Schalter S1 und S2 geschlossen. Der Generator G bzw. der Gleichrichter 1 gibt einen Strom an das Bordnetz ab, der sich aus den Lastwiderständen RL1 und RL2 ergibt. Ein Lastabwurf kann durch das Öffnen eines der Schalter S1 bzw. S2 nachgebildet werden. Das Öffnen des Schalters S1 entspricht damit einem Lastabfall auf 0%, wie er in der Realität beispielsweise durch den Abfall des Anschlusskabels am Generator verursacht würde. Das Öffnen des Schalters S2 bildet dagegen einen teilweisen Lastabfall nach, wie er durch die Abschaltung einer größeren resistiven Last, hier RL2, im Bordnetz verursacht wird. Die Höhe des "abgeworfenen" Laststroms lässt sich durch den Widerstandswert des Lastwiderstands RL2 einstellen, die Höhe des restlichen Bordnetzstroms durch den Widerstand des Lastwiderstands RL1.

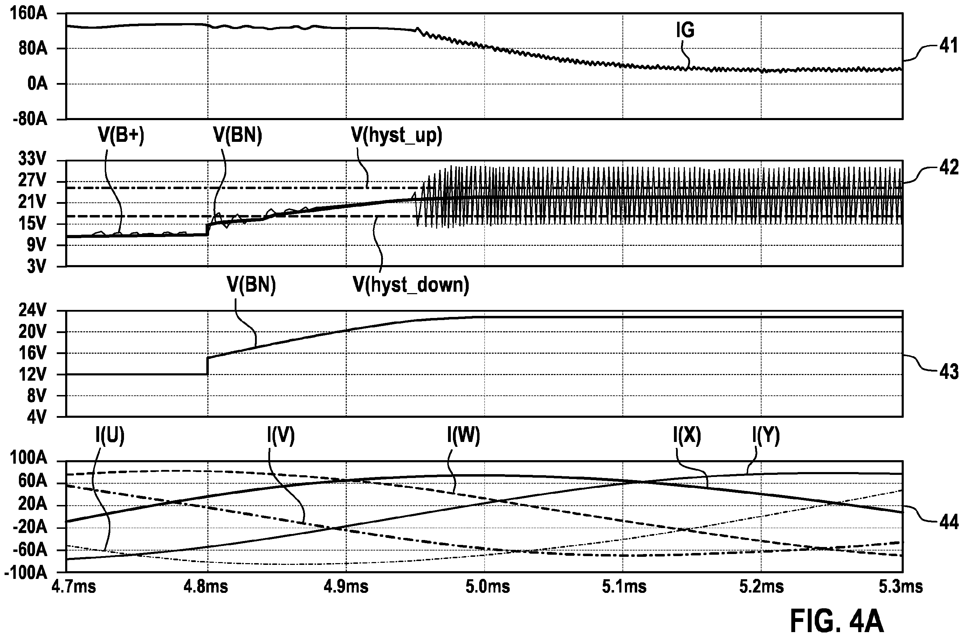

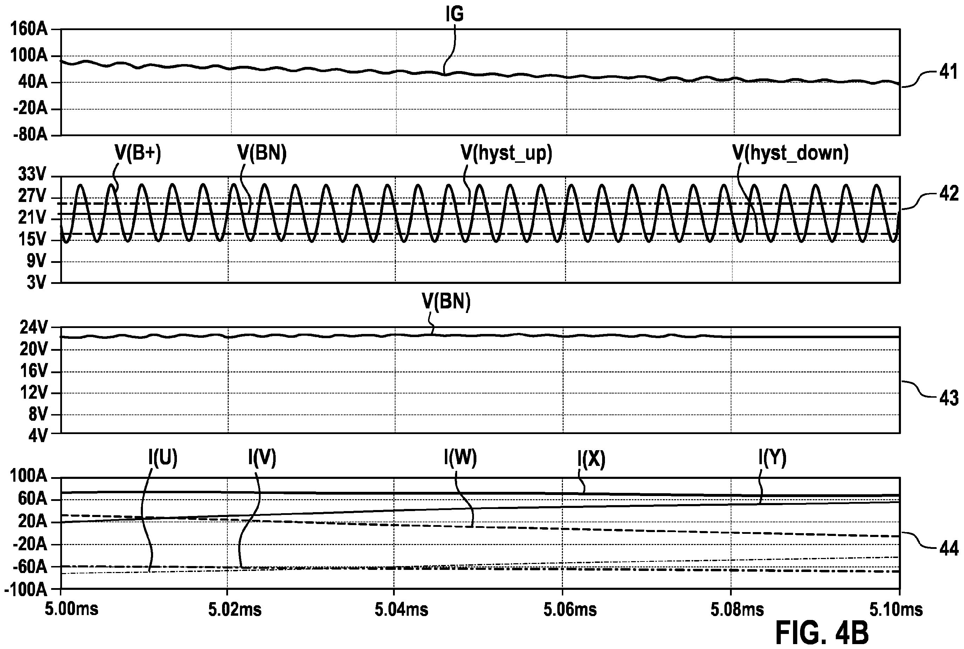

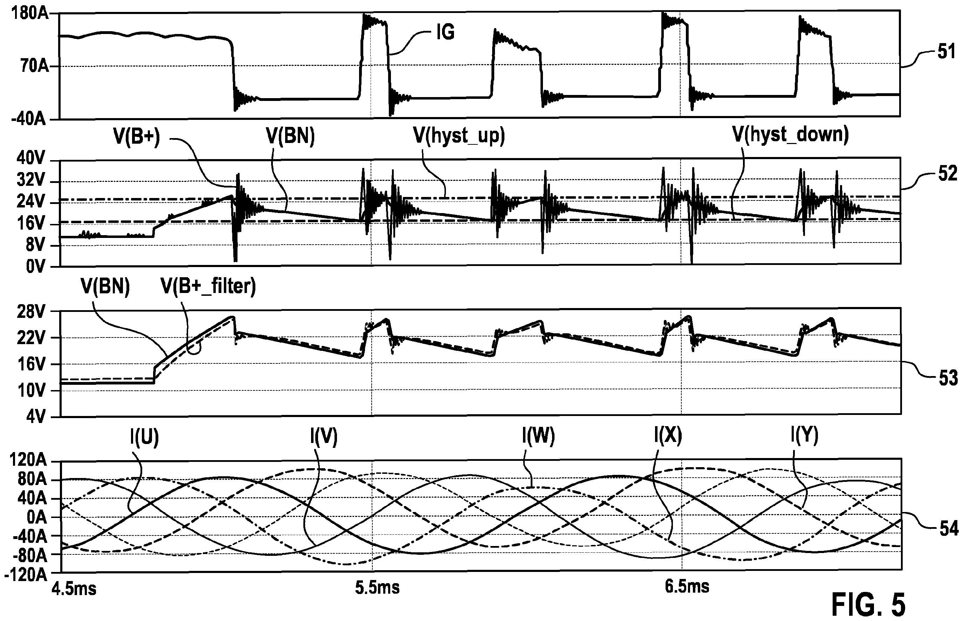

In den Figuren 3 bis 5 sind in jeweils vier Diagrammen Strom- und Spannungsverläufe an herkömmlich und erfindungsgemäß betriebenen Generatoren G bzw. Gleichrichtern 1 im Normalbetrieb (Figur 3) und bei Lastabwurf (Figuren 4 und 5) dargestellt. Die jeweiligen Strom- und Spannungsverläufe sind dabei jeweils in V bzw. A auf der Ordinate gegenüber einer Zeit in ms auf der Abszisse aufgetragen. Die Bezeichnung der Strom- und Spannungsverläufe ist in den Figuren 3 bis 6 identisch. Es sind jeweils Strom- und Spannungsverläufe eines fünfphasigen Generators G und eines entsprechenden zehnpulsigen Gleichrichters 1 veranschaulicht. Wie erläutert, kann die Erfindung auch bei anderen Phasen- bzw. Pulszahlen zum Einsatz kommen. In den Figuren 3 bis 5 entsprechen die Phasen U bis Y beispielsweise den in der Figur 1 dargestellten Phasen U bis Y.

Mit IG ist der abgegebene Generatorstrom, mit V(B+) die Spannung am positiven Spannungsanschluss des Gleichrichters bzw. B+, wie er in den Figuren 1 und 2 dargestellt ist, angegeben. Mit V(BN) ist die sich im Bordnetz einstellende Spannung bezeichnet, wie sie beispielsweise am Anschluss F1 des Fremdstartstützpunkts bzw. dem Punkt BN in Figur 2 gemessen werden kann. V(hyst_up) bezeichnet die obere Spannungsgrenze bzw. einen entsprechenden Schwellwert zur Aktivierung eines Phasenkurzschlusses. Wie erwähnt, wird beispielsweise in einer in Figur 1 dargestellten Anordnung über eine Leitung 3 ein Spannungswert an dem positiven Gleichspannungsanschluss B+ erfasst und mit einem entsprechenden Wert V(hyst_up) verglichen. Entsprechend bezeichnet V(hyst_down) die untere Spannungsgrenze bzw. einen entsprechenden Schwellwert zur Deaktivierung eines Phasenkurzschlusses. Mit I(U) bis I(Y) sind jeweils die Phasenströme in den Phasen U bis Y (vgl. Figur 1) bezeichnet.

Die Figur 3 zeigt Strom- und Spannungsverläufe bei regulärem Betrieb einer entsprechenden Anordnung aus einem Generator G und einem Gleichrichter 1 in einem Bordnetz. Man erkennt, dass zwischen den Werten für V(B+) und V(BN) nur geringfügige Unterschiede auftreten (vgl. Diagramm 32). Die Schwellwerte V(hyst_up) und V(hyst_down) werden nicht erreicht. Die Spannung V(BN) am Bordnetz (vgl. Diagramm 33) bewegt sich stets zwischen 11 und 12 V. Lediglich zu den Nulldurchgängen der Phasenströme (vgl. Diagramm 34 in Zusammenschau mit dem Diagramm 32) treten am positiven Gleichspannungsanschluss und damit in der Spannung V(B+) kurze Störungen auf, die eine Spannungsdifferenz zwischen V(B+) und V(BN) erzeugen. Diese erreichen das Bordnetz jedoch nicht, die Spannung V(BN) zeigt daher kaum Unregelmäßigkeiten. Der Generatorstrom IG (vgl. Diagramm 31) bewegt sich zwischen 120 und 160 A.

In Figur 4A und 4B ist ein Lastabwurf bei ca. 4,8 ms dargestellt. Die Figur 4B stellt eine Ausschnittsvergrößerung der Figur 4A dar. Wie aus dem Diagramm 42 in Figur 4A ersichtlich, kommt es ab diesem Zeitpunkt zu einem deutlichen Anstieg des Werts von V(B+). Bei ca. 4,95 ms erreicht der Wert von V(B+) erstmals den Schwellwert V(hyst_up). Wie erläutert, werden ab diesem Zeitpunkt Schutzmaßnahmen eingeleitet, die umfassen, einige oder alle Generatorphasen U bis Y durch gleichzeitiges Ansteuern einiger oder aller Schaltelemente im oberen oder unteren Gleichrichterzweig H bzw. L des Gleichrichters 2 kurzzuschließen (vgl. Erläuterungen zu Figur 1). Der Spannungswert an V(B+) sinkt hierdurch ab und unterschreitet den unteren Schwellwert V(hyst_down). Entsprechend wird der Phasenkurzschluss wieder aufgehoben, die Spannung steigt erneut an und überschreitet den oberen Schwellwert V(hyst_up), was erneut ein Kurzschließen bewirkt. Es ergeben sich hochfrequente (z.B. > 50 kHz), repetierende Phasenkurzschlüsse, wie insbesondere aus dem Diagramm 42 der Figur 4B ersichtlich. Aufgrund der Induktivitäten in den verbauten Leitungen, beispielsweise zwischen B+ und dem Anschluss F1 bzw. dem Punkt BN in Figur 2, kommt es aufgrund der schnellen Stromänderungen gemäß $\Delta U = L \times dI/dt$ zu einer Spannungsänderung an B+. Die Spannung am Bordnetz V(BN), beispielsweise die Spannung UF in Figur 2, verharrt hingegen auf einem nahezu festen Wert.

Wie erläutert, ist das in schneller Abfolge stattfindende Aktivieren und Deaktivieren des Phasenkurzschlusses durch die die Auslöseschwellen über- bzw. unterschreitenden Spannungsspitzen an dem Gleichspannungsanschluss B+ unerwünscht und soll verhindert werden.

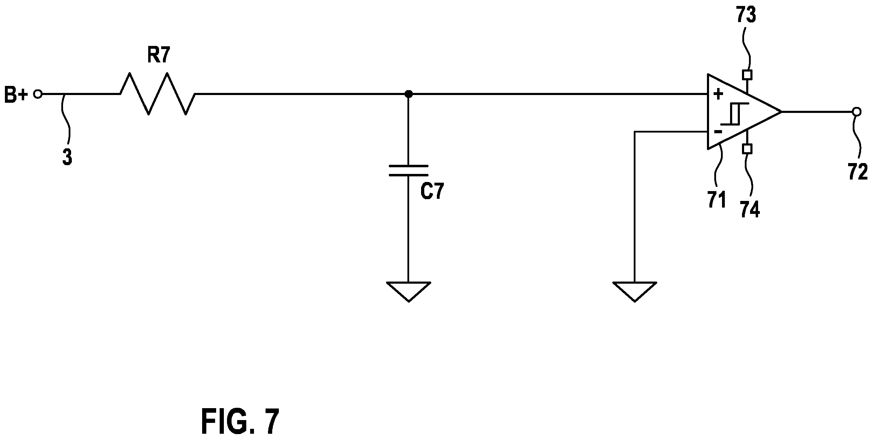

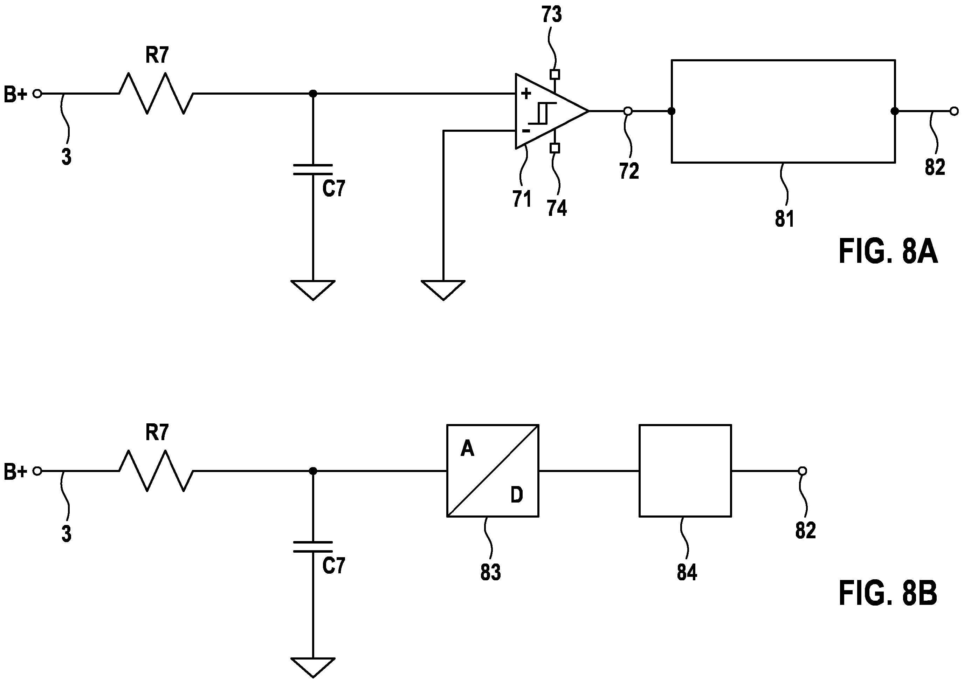

Dies wird erfindungsgemäß durch eine Filterung der Spannung V(B+), also der an beispielsweise der Leitung 3 in Figur 1 erfassten Spannung, und/oder eine adaptive Steuerung der Auslöseschwellen, also der Werte von V(hyst_up) bzw. V(hyst_down) erzielt. Ein wesentlicher Aspekt der vorliegenden Erfindung ist dabei die Emulation des Verlaufs der Bordnetzspannung V(BN) durch Einsatz eines Filters definierter Grenzfrequenz zwischen V(B+) und einem Komparatorblock, der mittels der genannten Auslöseschwellen V(hyst_down) und V(hyst_up) über die Deaktivierung und Aktivierung des Phasenkurzschlusses entscheidet. Erfindungsgemäß können beispielsweise ein RC-Filter, ein digitales Filter und/oder ein SC-Filter (Switched Capacitor) vorgesehen sein, wie nachfolgend im Detail in Figur 7 und den Teilfiguren 8A und 8B der Figur 8 veranschaulicht. Die Ergebnisse der erfindungsgemäßen Maßnahmen sind in Figur 5 veranschaulicht.

In der Figur 5 ist dabei in dem Diagramm 53 zusätzlich eine entsprechend vorgefilterte Spannung V(B+_filter) dargestellt. Wie aus Diagramm 53 ersichtlich, folgt dieses gefilterte Signal in hinreichender Genauigkeit der Bordnetzspannung V(BN). Mit Hilfe der Filterung von V(B+) wird damit gewissermaßen der Spannungsverlauf V(BN) emuliert. Hierdurch können die hochfrequenten Schaltvorgänge, wie sie in den Figuren 4A und 4B ersichtlich sind, vermieden werden, welche zu einer großen Verlustleistungsbelastung an den beteiligten Schaltelementen AH bis EH bzw. AL bis EL führen.

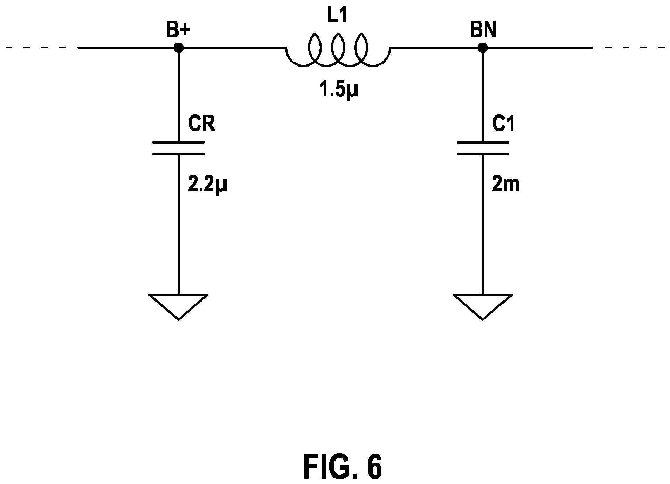

Anhand Figur 6 wird beispielhaft eine Dimensionierung eines zu verwendenden Filters veranschaulicht. Hierbei sind die in Figur 2 dargestellten kapazitiv und induktiv wirkenden Elemente nochmals im Detail gezeigt. Mit CR ist hier zusätzlich ein in einem Generatorregler üblicherweise verbauter Kondensator veranschaulicht. C1 bezeichnet, wie bereits in Figur 2, einen Kondensator am Fremdstartstützpunkt. Die Leitungslänge zwischen dem Gleichspannungsanschluss B+ am Gleichrichter 1 und dem Anschluss F1 bzw. BN am Fremdstartstützpunkt ist hier als Induktivität L1 veranschaulicht. B- liegt im dargestellten Beispiel auf Masse und ist nicht näher veranschaulicht. Die dargestellten Werte sind rein beispielhaft und richten sich nach der spezifischen Ausgestaltung des Bordnetzes.

Es lassen sich zwei Resonanzfrequenzen, nämlich am Eingang und Ausgang einer entsprechenden Strecke, FE und FA, bestimmen:

$$FE = \frac{1}{2\pi\sqrt{CR \times L1}} \tag{1}$$

$$FA = \frac{1}{2\pi\sqrt{C1 \times L1}} \tag{2}$$

Die Grenzfrequenz FC für einen RC-Filter hängt somit von den Werten der entsprechenden Größen in Figur 6, den fließenden Strömen und den Hystereseschwellen ab. Zur Emulation von V(BN) sollte die Grenzfrequenz typischerweise so gewählt sein, dass gilt:

1. FC << FE, und
2. FC > FA

mit

$$FC = \frac{1}{2\pi RC} \tag{3}$$

In Figur 7 ist eine entsprechende Filterung über ein RC-Filter veranschaulicht. Ein beispielsweise über eine Leitung 3 (vgl. Figur 1) erfasster Wert für die Spannung an B+ wird dabei über einen Widerstand R7 und einen Kondensator C7 geglättet, bevor sie einem Komparator 71 zugeführt wird. An einem Ausgang 72 des Komparators 71 wird ein Signal bereitgestellt, wenn erkannt wird, dass die gefilterte Spannung V(B+_filter), die dem Komparator 71 zugeführt wird, bestimmten Kriterien entspricht. Beispielsweise können über die Eingänge 73 und 74 entsprechende Hystereseschwellen vorgegeben werden.

Figur 8 in den Teilfiguren 8A und 8B eine gegenüber Figur 7 jeweils durch digitale Mittel erweiterte Signalfilterung.

Gemäß Teilfigur 8A ist dem Ausgang 72 des Komparators 71 ein Glitchfilter 81 nachgeschaltet. In der in der Teilfigur 8A dargestellten Anordnung dient das Vorfilter in Form des RC-Filters mit dem Widerstand R7 und dem Kondensator C7 der Dämpfung sehr steiler Spannungsspitzen und weist eine typische Grenzfrequenz FC auf, die etwa um den Faktor zwei unterhalb der Resonanzfrequenz FE liegt, um die hochfrequenten Resonanzschwingungen abzudämpfen. Anstelle eines RC-Filters kann auch ein anderes digitales Filter oder ein SC-Filter (Switched Capacitor) vorgesehen sein.

Für die Wahl der Glitchfilterzeit TG des Glitchfilters gilt:

$$TG \le L1 \frac{IG}{\left| V(hyst\_up) - V(hyst\_down) \right|} \qquad (4)$$

wobei L1 die Leitungsinduktivität zwischen dem Generator G bzw. dem Gleichrichter 1 und dem Fremdstartstützpunkt (L1 bzw. BN in Figur 2 und 6), IG der zum Zeitpunkt der Schaltvorgänge wirksame Generatorstrom (vgl. Figuren 3 bis 5) und | V(hyst_up) - V(hyst_down) | die Spannungsdifferenz zwischen den Schwellwerten (vgl. Figuren 3 bis 5, Spannungsdifferenz ΔU) ist.

Das Glitchfilter, das in an sich bekannter Weise ausgebildet sein kann, blendet Änderungen seiner Eingangsgröße aus, wenn ihre Dauer kleiner als TG ist.

Das erläuterte Filterverhalten kann auch, wie in der Teilfigur 8B veranschaulicht, durch eine A/D-Wandlung mittels eines A/D-Wandlers 83 mit einer diesem nachgeschalteten digitalen Schaltung 84 nachgebildet werden. Die erfinderische Idee, die erläuterten Nachteile des Standes der Technik zu überwinden, ist die adaptive Steuerung der Auslöseschwellen des Komparators 71, der über die Aktivierung und Deaktivierung des Phasenkurzschlusses entscheidet. Ein solches Verfahren kann auch mit den anderen Ausführungsformen, wie sie zuvor erläutert wurden, kombiniert werden.

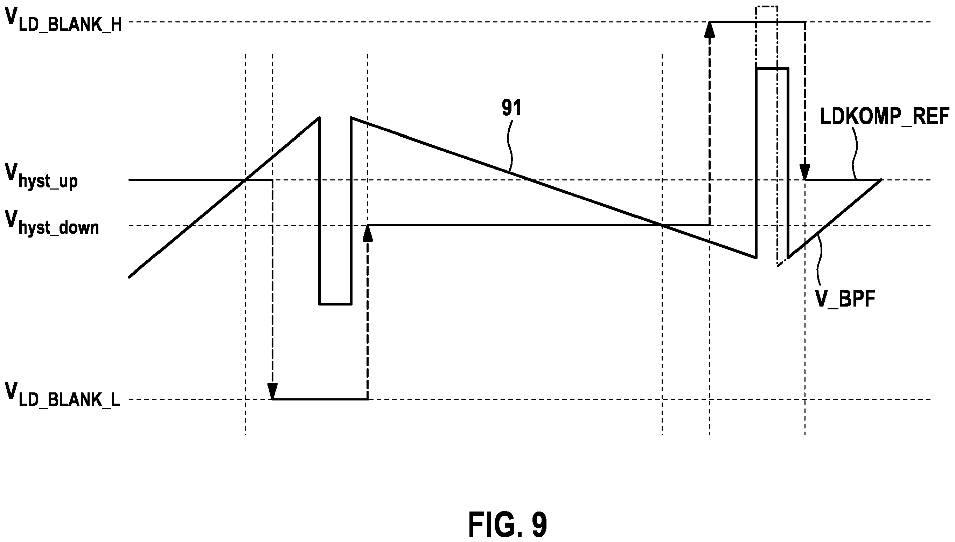

Hierzu kann beispielsweise der als Hystereseglied ausgebildete Komparator 71 der Figuren 7 und 8 durch einen Komparator mit veränderlicher Komparatorschwelle ersetzt werden. Der schematische Verlauf der Spannung am Gleichspannungsanschluss B+ ist zur Veranschaulichung in Figur 9 mit V_BP angegeben. Zum Zeitpunkt der erwarteten Spannungsspitze aufgrund einer Aktivierung oder Deaktivierung eines Phasenkurzschlusses wird die Erkennungsschwelle V(hyst_down) (vgl. Figuren 3 bis 5) für einen vorgegebenen Zeitraum auf einen niedrigeren Wert V_LD_BLANK_L abgesenkt bzw. die Erkennungsschwelle V(hyst_up) (vgl. ebenfalls Figuren 3 bis 5) angehoben. Die Werte V_LD_BLANK_L und V_LD_BLANK_H werden dabei von der Spannung V_BP sicher nicht erreicht, was einer faktischen Deaktivierung der entsprechenden Schwellwerte entspricht. Alternativ dazu können jeweils entsprechende Schwellwerte auch anderweitig ausgeblendet (deaktiviert) werden.

Dadurch kann in Gleichung 4 | V(hyst_up) - V(hyst_down) | (auch als ΔU bezeichnet) gemäß folgenden Kriterien eingestellt werden:

$$\Delta U <= V\_LD\_BLANK\_H - V(hyst\_down)$$

bzw.

$$\Delta U <= -(V\_LD\_BLANK\_L - V(hyst\_up)$$

Durch die höheren Löschspannungen ΔU ergeben sich in der Auslegung kürzere Glitchzeiten bzw. in Kombination mit der zuvor erläuterten ersten Ausführungsform die Möglichkeit, die Grenzfrequenz zu erhöhten und damit Verzögerungszeiten in der Reaktion zu reduzieren.

Nutzt man das Verfahren gemäß Figur 9 alleine, kann man durch geeignete Wahl der Werte von V_LD_BLANK_L, V_LD_BLANK_H und der Dauer der Veränderung der Erkennungsschwellen ebenfalls die genannten Nachteile im Stand der Technik vermeiden. Dazu sind V_LD_BLANK_L, V_LD_BLANK_H so zu wählen, dass Spitzen auf V(B+) nicht mehr zu einer unerwünschten Aktivierung und Deaktivierung des Phasenkurzschlusses führen.

**Patentansprüche**

1. Kraftfahrzeugbordnetz mit einer elektrischen Maschine (G), einem aktiven Brückengleichrichter (1) und zumindest einer Steuereinrichtung (2), wobei die zumindest eine Steuereinrichtung (2) dafür eingerichtet ist, eine von der elektrischen Maschine (G) über eine Anzahl von Phasenanschlüssen (U - Y) ausgegebene Wechselspannung durch Ansteuern von aktiven Schaltelementen (AH - EH, AL - EL) des Brückengleichrichters (1) in eine Gleichspannung (V(B+)) zu wandeln, und wobei Mittel (71) vorgesehen sind, die dafür eingerichtet sind, einen Kurzschluss zumindest zweier der Phasenanschlüsse (U - Y) einzuleiten, sobald ein die Gleichspannung (V(B+)) kennzeichnendes Signal einen oberen Schwellwert (V(hyst_up)) überschreitet und den Kurzschluss aufzuheben, sobald das die Gleichspannung (V(B+)) kennzeichnende Signal danach einen unteren Schwellwert (V(hyst_down)) unterschreitet, **gekennzeichnet durch** Auswertemittel (3, R7, C7, 81), die dafür eingerichtet sind, einen Wert der Gleichspannung (V(B+)) zu erfassen, den erfassten Wert zu filtern, und den gefilterten Wert als das die Gleichspannung (V(B+)) kennzeichnende Signal (V(B+_filter)) bereitzustellen, wobei die Auswertemittel (3, R7, C7, 81) dafür eingerichtet sind, das die Gleichspannung (V(B+)) kennzeichnende Signal (V(B+_filter)) einem Komparator (71) zuzuführen, der dafür eingerichtet ist, das die Gleichspannung (V(B+)) kennzeichnende Signal (V(B+_filter)) mit dem oberen Schwellwert (V(hyst_up)) und dem unteren Schwellwert (V(hyst_down)) zu vergleichen, wobei Einstellmittel vorgesehen sind, die dafür eingerichtet sind, den oberen Schwellwert (V(hyst_up)) und den unteren Schwellwert (V(hyst_down)) in Form einer einstellbaren Komparatorschwelle des Komparators (71) bereitzustellen, wobei die Einstellmittel dafür eingerichtet sind, den unteren Schwellwert (V(hyst_down)) für einen Zeitraum abzusenken oder zu deaktivieren, sobald das die Gleichspannung (V(B+)) kennzeichnende Signal den oberen Schwellwert (V(hyst_up)) überschreitet und den oberen Schwellwert (V(hyst_up)) für einen Zeitraum anzuheben oder zu deaktivieren, sobald das die Gleichspannung (V(B+)) kennzeichnende Signal den unteren Schwellwert (V(hyst_down)) unterschreitet.

2. Kraftfahrzeugbordnetz nach Anspruch 1, bei dem die Auswertemittel (3, R7, C7, 81) Filtermittel umfassen, die zumindest ein RC-Filter (R7, C7) oder ein Glitchfilter (81) und/oder ein SC-Filter aufweisen und/oder bei dem die Auswertemittel (3, R7, C7, 81) eine Anordnung mit einem A/D-Wandler (83) und einer diesem nachgeordneten digitalen Schaltung (84) umfassen, die dafür eingerichtet ist, ein entsprechendes Filterverhalten nachzubilden.

3. Kraftfahrzeugbordnetz nach einem der vorstehenden Ansprüche, bei dem die Auswertemittel (3, R7, C7, 81) dafür eingerichtet sind, den erfassten Wert der Gleichspannung (V(B+)) auf Grundlage wenigstens einer Resonanzfrequenz des Bordnetzes zu filtern.

4. Verfahren zum Betreiben eines Kraftfahrzeugbordnetzes mit einer elektrischen Maschine (G), einem aktiven Brückengleichrichter (1) und zumindest einer Steuereinrichtung (2), bei dem mittels der zumindest einen Steuereinrichtung (2) eine von der elektrischen Maschine (G) an einer Anzahl von Phasenanschlüssen (U - Y) ausgegebene Wechselspannung durch Ansteuern von aktiven Schaltelementen (AH - EH, AL - EL) des Brückengleichrichters (1) in eine Gleichspannung (V(B+)) gewandelt wird, und wobei ein Kurzschluss zumindest zweier der Phasenanschlüsse (U - Y) eingeleitet wird, sobald ein die Gleichspannung (V(B+)) kennzeichnendes Signal einen oberen Schwellwert (V(hyst_up)) überschreitet und der Kurzschluss aufgehoben wird, sobald das die Gleichspannung (V(B+)) kennzeichnende Signal danach einen unteren Schwellwert (V(hyst_down)) unterschreitet, **dadurch gekennzeichnet, dass** ein Wert der Gleichspannung (V(B+)) erfasst, der erfasste Wert gefiltert, und der gefilterte Wert als das die Gleichspannung (V(B+)) kennzeichnende Signal (V(B+_filter)) bereitgestellt wird, wobei das die Gleichspannung (V(B+)) kennzeichnende Signal (V(B+_filter)) einem Komparator (71) zugeführt wird, der das die Gleichspannung (V(B+)) kennzeichnende Signal (V(B+_filter)) mit dem oberen Schwellwert (V(hyst_up)) und dem unteren Schwellwert (V(hyst_down)) vergleicht, wobei der obere Schwellwert (V(hyst_up)) und der untere Schwellwert (V(hyst_down)) in Form einer einstellbaren Komparatorschwelle des Komparators (71) durch Einstellmittel bereitgestellt wird, wobei die Einstellmittel den unteren Schwellwert (V(hyst_down)) für einen Zeitraum absenken oder deaktivieren, sobald das die Gleichspannung (V(B+)) kennzeichnende Signal den oberen Schwellwert (V(hyst_up)) überschreitet und den oberen Schwellwert (V(hyst_up)) für einen Zeitraum anheben oder deaktivieren, sobald das die Gleichspannung (V(B+)) kennzeichnende Signal den unteren Schwellwert (V(hyst_down)) unterschreitet.

5. Verfahren nach Anspruch 4, das zum Betreiben eines Kraftfahrzeugbordnetzes nach einem der Ansprüche 1 bis 3 verwendet wird.

6. Verfahren nach einem der Ansprüche 4 oder 5, bei dem der erfasste Wert der Gleichspannung (V(B+)) mittels wenigstens eines Filters (R7, C7, 81) gefiltert wird, dessen Filterparameter zumindest teilweise auf Grundlage von Kapazitäts- und/oder Induktivitätswerten von Komponenten des Kraftfahrzeugbordnetzes ausgewählt werden und/oder bei dem Parameter zumindest eines digitalen Filters entsprechend eingestellt werden.

7. Recheneinheit, die programmtechnisch dazu eingerichtet ist, ein Verfahren nach einem der vorstehenden Verfahrensansprüche durchzuführen.

8. Computerprogramm, das eine Recheneinheit dazu veranlasst, ein Verfahren nach einem der vorstehenden Verfahrensansprüche durchzuführen, wenn es auf der Recheneinheit, insbesondere einer Recheneinheit nach dem vorstehenden Anspruch ausgeführt wird.

9. Maschinenlesbares Speichermedium mit einem darauf gespeicherten Computerprogramm nach dem vorstehenden Anspruch.

**Claims**

1. A motor vehicle on-board electrical system with an electric machine (G), an active bridge rectifier (1) and at least one control device (2), wherein said at least one control device (2) is adapted to convert an AC voltage output by the electric machine (G) via a number of phase terminals (U - Y) by driving active switching elements (AH - EH, AL - EL) of the bridge rectifier (1) into a DC voltage (V (B +)), and means (71) are provided which are adapted to initiate a short circuit of at least two of the phase terminals (U - Y), as soon as a signal characterising the DC voltage (V (B +)) exceeds an upper threshold value (V (hyst_up)) and to cancel the short circuit, as soon as the signal characterising the DC voltage (V (B +)) falls below a lower threshold value (V (hyst_down)), **characterised by** evaluation means (3, R7, C7, 81) adapted to detect a value of the DC voltage (V (B +)), to filter the detected value, and to provide the filtered value as the signal (V (B + _filter)) characterising the DC voltage (V (B +)), wherein the evaluation means (3, R7, C7, 81) are adapted to supply the signal characterising the DC voltage (V(B +)) to a comparator (71), which is adapted to compare the signal (V (B + _filter)) characterising the DC voltage (V (B +)) with the upper threshold value (V (hyst_up)) and the lower threshold value (V (hyst_down)), wherein adjusting means are provided which are adapted to provide the upper threshold (V (hyst_up)) and the lower threshold (V (hyst_down)) in the form of an adjustable comparator threshold of the comparator (71), wherein the adjusting means are adapted to lower or to deactivate the lower threshold value (V (hyst_down)) for a period of time as soon as the signal characterising the DC voltage (V (B +)) exceeds the upper threshold value (V (hyst_up)), and raise or deactivate the upper threshold (V (hyst_up)) for a period of time when the signal charaterising the DC voltage (V (B +)) falls below the lower threshold (V (hyst_down)).

2. The motor vehicle on-board electrical system according to claim 1, in which the evaluation means (3, R7, C7, 81) comprise filter means which have at least one RC filter (R7, C7) or a glitch filter (81) and/or an SC filter, and/or in which the evaluation means (3, R7, C7, 81) comprise an arrangement comprising an A/D converter (83) and a digital circuit (84) arranged downstream thereof, which is arranged to emulate a corresponding filter behaviour.

3. The motor vehicle on-board electrical system according to one of the preceding claims, wherein the evaluation means (3, R7, C7, 81) are adapted to filter the detected value of the DC voltage (V (B +)) based on at least one resonance frequency the on-board network.

4. The method for operating a motor vehicle on-board electrical system with an electric machine (G), an active bridge rectifier (1) and at least one control device (2), in which by means of said at least one control device (2) an alternating voltage output by the electric machine (G) at a number of phase terminals (U - Y) is converted into a DC voltage (V (B +)) by driving active switching elements (AH - EH, AL - EL) of the bridge rectifier (1), and wherein a short circuit of at least two of the phase terminals (U - Y) is initiated as soon as a signal characterising the DC voltage (V (B +)) exceeds an upper threshold value (V (hyst_up)) and the short circuit is cancelled as soon as the signal characterising the DC voltage (V (B +)) falls below a lower threshold value (V (hyst_down)), **characterised in that** a value of the DC voltage (V (B +)) is detected, that the detected value is filtered and the filtered value is provided as the DC (V (B +)) signal charaterising the DC voltage (V (B + _filter)), wherein the signal charaterising the DC voltage (V (B +)) (V (B + _filter)) is supplied to a comparator (71) which compares the signal (V (B + _filter)) characterising the DC voltage (V (B +)) with the upper threshold value (V (hyst_up)) and the lower threshold value (V (hyst_down)), wherein the upper threshold value (V (hyst_up)) and the lower threshold value (V (hyst_down)) are provided in the form of an adjustable comparator threshold of the comparator (71) by adjusting means, wherein the adjusting means decreases or deactivates the lower threshold (V (hyst_down)) for a period of time, when the signal characterising the DC voltage (V (B +)) exceeds the upper threshold (V{hyst_up)), and raises or deactivates the upper threshold (V (hyst_up)) for a period of time as soon as the signal characterising the DC voltage (V (B +)) falls below a lower threshold value (V (hyst_down)).

5. The method of claim 4, used for operating a motor vehicle on-board electrical system according to one of claims 1 to 3.

6. The method according to any of the claims 4 or 5, in which the detected value of the DC voltage (V (B +)) is filtered by means of at least one filter (R7, C7, 81) whose filter parameters are at least partially selected based on capacitance and/or inductance values of components of the motor vehicle on-board electrical system, and/or wherein parameters of at least one digital filter are set up accordingly.

7. Computing unit which is set up in accordance with a program to carry out a method according to one of the preceding method claims.

**8.** The computer program that causes a computing unit to perform a method according to one of the preceding method claims, when it is executed on the computing unit, in particular a computing unit according to the above claim.

**9.** A machine-readable storage medium with a computer program stored thereon according to the preceding claim.

**Revendications**

**1.** Réseau de bord d'un véhicule automobile ayant une machine électrique (G), un redresseur en pont actif (1) et au moins un dispositif de commande (2), dans lequel le au moins un dispositif de commande (2) est configuré pour convertir ne tension alternative délivrée par la machine électrique (G) par le biais d'un ensemble de bornes de phase (U - Y) en une tension continue (V(B+)) en commandant des éléments de commutation actifs (AH - EH, AL - EL) du redresseur en pont (1), et dans lequel sont prévus des moyens (71) configurés pour créer un court-circuit d'au moins deux des bornes de phase (U - Y) dès qu'un signal caractérisant la tension continue (V(B+)) passe au-dessus d'une valeur de seuil supérieure (V(hyst_up)) et pour supprimer le court-circuit dès que le signal caractérisant la tension continue (V(B+)) passe ensuite au-dessous d'une valeur de seuil inférieure (V(hyst_down)), **caractérisé par** des moyens d'évaluation (3, R7, C7, 81) configurés pour détecter une valeur de la tension continue (V(B+)), pour filtrer la valeur détectée et pour fournir la valeur filtrée en tant que signal (V(B+_filter)) caractérisant la tension continue (V(B+)), dans lequel les moyens d'évaluation (3, R7, C7, 81) sont configurés pour transmettre le signal (V(B+_filter)) caractérisant la tension continue (V(B+)) à un comparateur (71) configuré pour comparer le signal (V(B+_filter)) caractérisant la tension continue (V(B+)) à la valeur de seuil supérieure (V(hyst_up)) et à la valeur de seuil inférieure (V(hyst-down)), dans lequel sont prévus des moyens de réglage configurés pour fournir la valeur de seuil supérieure (V(hyst_up)) et la valeur de seuil inférieure (V(hyst_down)) sous la forme d'un seuil de comparateur réglable du comparateur (71), dans lequel les moyens de réglage sont configurés pour réduire ou désactiver la valeur de seuil inférieure (V(hyst_down)) pendant une période de temps, dès que le signal caractérisant la tension continue (V(B+)) passe au-dessus de la valeur de seuil supérieure (V(hyst_up)), et pour augmenter ou désactiver la valeur de seuil supérieure (V(hyst_up)) pendant une période de temps, dès que le signal caractérisant la tension continue (V(B+)) passe au-dessous de la valeur de seuil inférieure (V(hyst_down)).

**2.** Réseau de bord d'un véhicule automobile selon la revendication 1, dans lequel les moyens d'évaluation (3, R7, C7, 81) comprennent des moyens de filtrage comportant au moins un filtre RC (R7, C7) ou un filtre de pointe de tension (81) et/ou un filtre SC, et/ou dans lequel les moyens d'évaluation (3, R7, C7, 81) comprennent un agencement avec un convertisseur A/N (83) et un circuit numérique (84) agencé en aval de celui-ci qui est configuré pour simuler un comportement de filtre correspondant.

**3.** Réseau de bord d'un véhicule automobile selon l'une des revendications précédentes, dans lequel les moyens d'évaluation (3, R7, C7, 81) sont configurés pour filtrer la valeur détectée de la tension continue (V(B+)) sur la base d'au moins une fréquence de résonance du réseau de bord.

**4.** Procédé pour faire fonctionner un réseau de bord d'un véhicule automobile comportant une machine électrique (G), un redresseur en pont actif (1) et au moins un dispositif de commande (2), dans lequel une tension alternative délivrée par la machine électrique (G) à un ensemble de bornes de phase (U - Y) est convertie en une tension continue (V(B+)) en commandant des éléments de commutation actifs (AH - EH, AL - EL) du redresseur en pont (1) à l'aide du au moins un dispositif de commande (2), et dans lequel un court-circuit d'au moins deux des bornes de phase (U - Y) est créé dès qu'un signal caractérisant la tension continue (V(B+)) passe au-dessus d'une valeur de seuil supérieure (V(hyst_up)), et le court-circuit est supprimé dès que le signal caractérisant la tension continue (V(B+)) passe ensuite au-dessous d'une valeur de seuil inférieure (V(hyst_down)), **caractérisé en ce qu'**une valeur de la tension continue (V(B+)) est détectée, la valeur détectée est filtrée et la valeur filtrée est fournie en tant que signal (V(B+_filter) caractérisant la tension continue (V(B+)), dans lequel le signal (V(B+_filter) caractérisant la tension continue (V(B+)) est transmis à un comparateur (71) qui compare le signal (V(B+_filter)) caractérisant la tension continue (V(B+)) avec la valeur de seuil supérieure (V(hyst_up)) et avec la valeur de seuil inférieure (V(hyst_down)), dans lequel la valeur de seuil supérieure (V(hyst_up)) et la valeur de seuil inférieure (V(hyst_down)) sont fournies sous la forme d'un seuil de comparateur réglable du comparateur (71) par des moyens de réglage, dans lequel les moyens de réglage réduisent ou désactivent la valeur de seuil inférieure (V(hyst_down)) pendant une période de temps, dès que le signal caractérisant la tension continue (V(B+)) passe au-dessus de la valeur de seuil supérieure (V(hyst_up)), et augmentent ou désactivent la valeur de seuil supérieure (V(hyst_up)) pendant une période de temps, dès que le signal caractérisant la tension continue (V(B+)) passe au-dessous de la valeur de seuil inférieure (V(hyst_down)).

**5.** Procédé selon la revendication 4, qui est utilisé pour faire fonctionner un réseau de bord d'un véhicule automobile selon l'une des revendications 1 à 3.

**6.** Procédé selon l'une des revendications 4 ou 5, dans lequel la valeur détectée de la tension continue (V(B+)) est filtrée au moyen d'au moins un filtre (R7, C7, 81) dont les paramètres de filtrage sont choisis au moins en partie sur la base de valeurs de capacité et/ou d'inductance de composants du réseau de bord d'un véhicule automobile, et/ou dans lequel des paramètres d'au moins un filtre numérique sont réglés en conséquence.

**7.** Unité de calcul dont le programme est configuré pour mettre en mettre en oeuvre un procédé selon l'une des revendications de procédé précédentes.

**8.** Programme informatique qui permet à une unité de calcul de mettre en oeuvre un procédé selon l'une des revendications de procédé précédentes lorsqu'il est exécuté sur l'unité de calcul, en particulier une unité de calcul selon la revendication précédente.

**9.** Support d'enregistrement lisible par machine ayant un programme informatique selon la revendication précédente enregistré sur celui-ci.

FIG. 1

**FIG. 2**

FIG. 3

FIG. 4A

FIG. 4B

EP 3 069 427 B1

FIG. 5

EP 3 069 427 B1

B+      L1      BN

1.5μ

CR         C1

2.2μ        2m

FIG. 6

FIG. 7

**FIG. 8A**

**FIG. 8B**

**FIG. 9**

EP 3 069 427 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009046955 A1
- DE 19835316 A1
- FR 297241 A1
- EP 1198048 A2
- WO 2009093101 A1